# EUROPEAN PATENT APPLICATION

(11) **EP 4 644 083 A1**
(43) Date of publication of application: **05.11.2025**
(21) Application number: 23919894.8
(22) Date of filing: 17.11.2023
(51) Int. Cl.: B29C 45/14, B32B 7/027, B32B 27/00, B32B 27/30

(54) **DECORATIVE MOLDED ARTICLE AND PRODUCTION METHOD FOR SAME**

(30) Priority: 31.01.2023 JP 2023012596
(71) Applicant: NISSHA CO., LTD., Kyoto-shi, Kyoto 604-8551 (JP)
(72) Inventor: TOMOBE, Yuki, Kyoto-shi, Kyoto 604-8551 (JP); KITAMURA, Shinichi, Kyoto-shi, Kyoto 604-8551 (JP)
(74) Representative: Isarpatent
(86) International application number: PCT/JP2023/041503
(87) International publication number: WO 2024/161759

(57) **Abstract**

[Problem] To provide a decorative molding in which a decorative sheet having both good pencil hardness and stretchability is used, and the decorative sheet and an injection molding are well adhered to each other.

[Solution] A decorative molded article 10 includes an injection molding 11 made of an acrylic resin having a Tg of 110°C to 130°C, and a decorative sheet 12 formed on the injection molding 11 via an adhesive layer 13 made of a vinyl chloride-vinyl acetate copolymer resin.

The decorative sheet 12 includes a base material 14 made of an acrylic resin having a Tg of 90°C to 130°C, a hard coat layer 15 formed on the base material, and an antireflection layer 16 formed on the hard coat layer 15.

## Description

### Technical Field

The present invention relates to a decorative molded article and a method for producing the same, and more particularly to a decorative molded article using a decorative sheet having both good pencil hardness and stretchability and a method for producing the same.

### Background Art

Conventionally, a decorative molded article has been produced by in-mold molding in which a decorative sheet and an injection molding are integrated in an injection molding die. Such a decorative molded article is used for automobile interior, an exterior of an electrical appliance, a cover panel of a display, and the like. For example, Patent Literature 1 describes that a decorative sheet having high temperature resistance and high moisture resistance using an acrylic resin film is shaped into a three-dimensional shape, the shaped decorative sheet is disposed in an injection molding die, and then a molten resin is injected to integrate the decorative sheet and the injection molding, thereby producing a cover panel of an on-vehicle display.

### Citation List

### Patent Literature

Patent Literature 1: JP 2020-82729 A

### Summary of Invention

### Technical Problem

In the cover panel of the conventional display as described above, a hard coat layer may be used for the decorative sheet when good pencil hardness is required. However, when the pencil hardness is increased only by the hard coat layer, the decorative sheet is difficult to stretch and cracks are likely to occur in some cases. When the decorative sheet is preformed before the decorative sheet is disposed in the injection molding die, the decorative sheet can be shaped under relatively gentle conditions such as a preheating temperature of about 80°C to 160°C, so that cracks are less likely to occur even when the decorative sheet as described above is used. On the other hand, when the decorative sheet is formed into a three-dimensional shape in the injection molding die, the decorative sheet is formed only under heating conditions at a high temperature of about 200°C to 400°C for a short time and with a suction force, so that there is a high possibility that cracks occur in the decorative sheet. In order to solve such a problem, in the present invention, by using an acrylic resin having a high glass transition temperature (Tg) for a base material of the decorative sheet, a decorative sheet having both good pencil hardness and stretchability has been achieved.

Also, in a cover panel of a display, a polycarbonate resin having high heat resistance is generally used for an injection molding. However, the polycarbonate resin has low pencil hardness and high molding temperature, and thus there have been problems that the decorative sheet is easily damaged, and is likely to cause iridescence due to birefringence. From such problems, in the present invention, it was studied to use a heat-resistant acrylic resin having a high Tg, which can solve these problems, in an injection molding. However, the present inventors have found a new problem that a heat-resistant acrylic resin as a base material of a decorative sheet and a heat-resistant acrylic resin used for an injection molding are difficult to bond to each other, and even when a general adhesive layer is applied between the base material of the decorative sheet and the injection molding, the base material of the decorative sheet and the injection molding do not adhere well. This problem is particularly remarkable in a portion where the temperature tends to be low, such as a final filled portion during injection molding.

The present invention has been made to solve the above-described problems, and an object of the present invention is to provide a decorative molding in which a decorative sheet having both good pencil hardness and stretchability is used, and the decorative sheet and an injection molding are well adhered to each other.

### Solution to Problem

In order to achieve the above object, a first invention provides a decorative molded article including an injection molding made of an acrylic resin having a glass transition temperature of 110°C to 130°C; an adhesive layer made of a vinyl chloride-vinyl acetate copolymer resin that is formed on the injection molding; and a decorative sheet formed on the adhesive layer, wherein the decorative sheet includes a base material made of an acrylic resin having a glass transition temperature of 90°C to 130°C, a hard coat layer formed on the base material, and an antireflection layer formed on the hard coat layer, and the base material of the decorative sheet is bonded to the injection molding.

A second invention provides the decorative molded article according to the first invention, wherein the pencil hardness measured from the antireflection layer side of the decorative sheet is 2B to 3H.

A third invention provides the decorative molded article according to the first invention, wherein when a test piece of 10 mm × 100 mm of the decorative sheet is fixed at a temperature of 120°C with a distance between chucks of 40 mm and a distance between marked lines of 40 mm and a tensile test is performed with a load applied to one end of the test piece at a constant speed of 200 mm/min, the elongation percentage of the decorative sheet when cracks or whitening occur is 100% to 160%.

According to the configurations of the first to third invention, the decorative molded article has heat resistance because the acrylic resin having a higher Tg than a general acrylic resin is used for the injection molding. Also, since the injection molding is an acrylic resin, birefringence hardly occurs. Therefore, even when the decorative molded article is used for the cover panel of the display, the screen is less likely to be unclear.

In addition, since the acrylic resin having a higher Tg than a general acrylic resin is used for the base material of the decorative sheet, the decorative sheet has both hardness and stretchability. Therefore, the decorative sheet less likely to be cracked while maintaining the hardness is obtained, as compared with the case where the pencil hardness of the decorative sheet is increased only with the hard coat layer.

Further, since the vinyl chloride-vinyl acetate copolymer resin is used for the adhesive layer, the injection molding made of the acrylic resin having a high Tg and the base material of the decorative sheet made of the acrylic resin having a high Tg, which hardly bond to each other, adhere to each other well. Therefore, a decorative molding in which the injection molding and the base material of the decorative sheet are hardly separated from each other is obtained.

A fourth invention provides the decorative molded article according to the first invention, wherein the hard coat layer contains acrylic resin beads, and has fine irregularities on a surface on which the antireflection layer is formed.

With this configuration, the acrylic resin beads impart a function of suppressing reflection on the hard coat layer, so that the decorative molded article less likely to be cracked and having high chemical resistance is obtained, as compared with the case of using silica beads which are particles generally added for suppressing reflection.

A fifth invention provides the decorative molded article according to the first invention, further including a decorative layer between the adhesive layer and the base material or on a surface of the injection molding opposite to a surface on which the adhesive layer is formed.

A sixth invention provides the decorative molded article according to the first invention, further including a base sheet on a surface of the injection molding opposite to a surface on which the adhesive layer is formed, and a decorative layer between the base sheet and the injection molding or on a surface of the base sheet opposite to a surface on which the injection molding is formed.

According to the configurations of the fifth invention and the sixth invention, since the decorative molded article can be decorated by the decorative layer, the decorative molded article can be adapted to various designs.

A seventh invention provides a method for producing a decorative molded article including the steps of preparing a decorative sheet including a base material made of an acrylic resin having a glass transition temperature of 90°C to 130°C, a hard coat layer formed on the base material, and an antireflection layer formed on the hard coat layer; forming an adhesive layer made of a vinyl chloride-vinyl acetate copolymer resin on a surface of the base material opposite to a surface on which the hard coat layer is formed; disposing the decorative sheet on which the adhesive layer is formed in an injection molding die including a first die and a second die that forms a cavity with the first die by clamping such that the antireflection layer faces a cavity surface of the first die of the injection molding die; three-dimensionally molding the decorative sheet on which the adhesive layer is formed along a shape of a cavity surface of the first die; clamping the injection molding die; injecting a molten resin made of an acrylic resin having a glass transition temperature of 90°C to 130°C into the cavity to mold an injection molding, and simultaneously fixing the decorative sheet to a surface of the injection molding via the adhesive layer; and opening the injection molding die to take out the injection molding.

An eighth invention provides a method for producing a decorative molded article according to the seventh invention, further including the steps of preparing an insert sheet including a base sheet and a decorative layer formed on the base sheet before the step of clamping the injection molding die, and disposing the insert sheet such that the base sheet or the decorative layer faces a cavity surface of the second die of the injection molding die, wherein the step of fixing the decorative sheet to the surface of the injection molding via the adhesive layer is a step of injecting a molten resin made of an acrylic resin having a glass transition temperature of 90°C to 130°C into the cavity to mold an injection molding, and simultaneously fixing the decorative sheet to the surface of the injection molding on the first die side via the adhesive layer, and fixing the base sheet or the decorative layer of the insert sheet to the surface of the injection molding on the second die side.

According to the configurations of the seventh invention and the eighth invention, since the vinyl chloride-vinyl acetate copolymer resin is used for the adhesive layer, the injection molding which is the acrylic resin having a high Tg and the base material of the decorative sheet which is the acrylic resin having a high Tg are easily bonded to each other, so that the injection molding and the base material of the decorative sheet are hardly separated from each other.

### Advantageous Effects of Invention

According to the present invention, it is possible to obtain a decorative molding in which a decorative sheet has both good pencil hardness and stretchability, and the decorative sheet and an injection molding are well adhered to each other.

### Brief Description of Drawings

Fig. 1 is a perspective view of a decorative molded article according to a first embodiment of the present invention.
Fig. 2(a) is a schematic cross-sectional view taken along line II-II illustrated in Fig. 1. Fig. 2(b) is a schematic cross-sectional view of a hard coat layer.
Fig. 3 is a schematic cross-sectional view illustrating the steps of producing the decorative molded article according to the first embodiment of the present invention.
Fig. 4(a) is a schematic plan view of a tensile tester. Fig. 4(b) is a schematic cross-sectional view of the tensile tester.
Fig. 5 is a schematic cross-sectional view of a decorative molded article according to a second embodiment of the present invention.
Fig. 6 is a schematic cross-sectional view of a decorative molded article according to a third embodiment of the present invention.
Fig. 7 is a schematic cross-sectional view of a decorative molded article according to a fourth embodiment of the present invention.
Fig. 8 is a schematic cross-sectional view of a decorative molded article according to a fifth embodiment of the present invention.
Fig. 9 is a schematic cross-sectional view illustrating the steps of producing the decorative molded article according to the fourth embodiment of the present invention.

### Description of Embodiments

A decorative molded article 10 according to a first embodiment of the present invention will be described below with reference to the drawings.

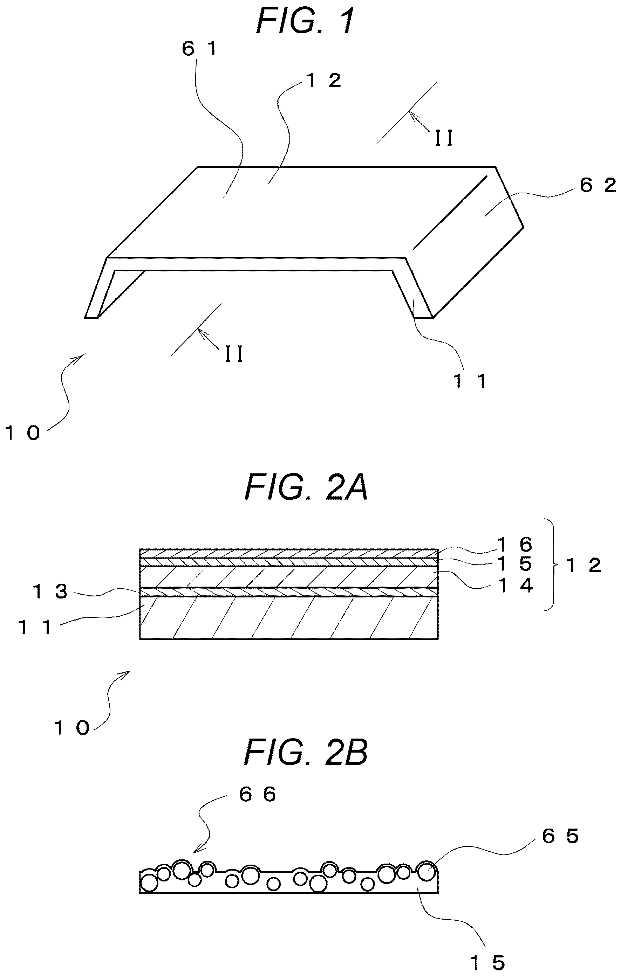

Referring to Fig. 1, the decorative molded article 10 according to the first embodiment of the present invention has a rectangular shape in plan view, and includes a flat portion 61 having a flat plate shape, and rising portions 62 rising downward from two short sides of the flat portion 61 at the same height. The two rising portions 62 facing each other are connected at an obtuse angle to the flat portion 61 so as to be away from each other as rising downward.

Referring to Figs. 1 and 2(a), the decorative molded article 10 includes an injection molding 11 and a decorative sheet 12 formed on the injection molding 11 via an adhesive layer 13. The adhesive layer 13 and the decorative sheet 12 are formed on a side opposite to a direction in which the rising portions 62 of the injection molding 11 rise.

The decorative sheet 12 includes a base material 14, a hard coat layer 15 formed on the base material 14, and an antireflection layer 16 formed on the hard coat layer 15. The base material 14 of the decorative sheet 12 is formed on the injection molding 11 via the adhesive layer 13. The decorative molded article 10 is applied to, for example, a cover panel of a display, an in-vehicle interior, and an exterior of an electrical appliance.

The injection molding 11 is made of a heat-resistant acrylic resin having a high glass transition temperature (Tg). The injection molding 11 has a Tg of, for example, 110°C to 130°C. When the Tg is 110°C or higher, favorable heat resistance can be obtained even when used in an environment where a high temperature is assumed, such as a cover panel of an in-vehicle display or an in-vehicle interior. When the Tg is 130°C or lower, the injection molding 11 can be molded without excessively increasing the molding temperature and the die temperature when forming the injection molding 11 by injection molding, so that the decorative sheet 12 formed on the injection molding 11 is less likely to be damaged.

The injection molding 11 has a thickness of, for example, 1 mm to 4 mm. When the thickness is 1 mm or more, the molten resin during injection molding is hardly cooled in the die, and the injection molding 11 and the base material 14 of the decorative sheet 12 are easily adhered to each other. When the thickness is 4 mm or less, sinks and voids due to injection molding are less likely to occur.

The base material 14 is made of a heat-resistant acrylic resin having a high Tg. The base material 14 has a Tg of, for example, 90°C to 130°C. When the Tg is 90°C or higher, good pencil hardness is obtained. When the Tg is 130°C or lower, the base material 14 is less likely to be brittle.

The base material 14 has a thickness of, for example, 90 µm to 250 µm. When the thickness is 90 µm or more, good pencil hardness is obtained. When the thickness is 250 µm or less, heat is easily transferred to the decorative sheet 12 when forming in an injection molding die, and the decorative sheet is easily stretched.

The hard coat layer 15 is a layer that imparts hardness to the decorative molded article. As the material of the hard coat layer 15, a material that is crosslinked or cured by energy such as heat, ultraviolet rays, or electron beams can be used, and examples thereof include an acrylic resin, a polyester-based resin, a polyvinyl chloride-based resin, a cellulose-based resin, a rubber-based resin, a polyurethane-based resin, a polyvinyl acetate-based resin, and copolymers such as a vinyl chloride-vinyl acetate copolymer-based resin and an ethylene-vinyl acetate copolymer-based resin. In the state of the decorative sheet 12 before injection molding, the hard coat layer 15 may be in a cured state, or in an uncured or semi-cured state. The uncured or semi-cured hard coat layer 15 can be cured after the decorative molded article 10 is produced using the decorative sheet 12.

The hard coat layer 15 has a thickness of, for example, 0.5 µm to 20 µm. When the thickness is 0.5 µm or more, good pencil hardness is obtained. When the thickness is 20 µm or less, cracks are less likely to occur in the hard coat layer 15.

In addition, an anti-glare function may be imparted to the hard coat layer 15. For example, referring to Fig. 2 (b), an anti-glare function can be imparted by adding acrylic resin beads 65 to the material of the hard coat layer 15. The acrylic resin beads 65 have an average particle diameter of 0.5 µm to 3 µm. When the average particle diameter is 0.5 µm or more, incident light can be sufficiently diffused, and when the average particle diameter is 3 µm or less, glare caused by the acrylic resin beads 65 can be suppressed. Here, the average particle diameter is an average particle diameter of primary particles measured by a laser diffraction/scattering particle size distribution measuring device. As the acrylic resin beads, only those having the same particle diameter may be used, or those having different particle diameters may be used in combination. In the hard coat layer 15, fine irregularities 66 are formed on a surface on which the antireflection layer 16 is formed. The fine irregularities 66 are formed by raising the surface of the hard coat layer 15 by the acrylic resin beads 65 present near the surface on the antireflection layer 16 side.

The antireflection layer 16 is a layer for weakening external light reflected by the decorative molded article 10. As a material of the antireflection layer 16, for example, a vapor deposition layer of a metal compound such as Al₂O₃, ZnO₂, or MgF₂, a vapor deposition layer in which a low refractive index metal compound such as SiO₂ or MgF₂ and a high refractive index metal compound such as ZnO₂ or TiO₂ are laminated, a resin coating layer made of a fluorine-based polymer, a silicon oxide gel, or the like can be used. In addition, these may be combined.

The antireflection layer 16 has a thickness of, for example, 50 nm to 130 nm. When the thickness is 50 nm or more, good pencil hardness is obtained. When the thickness of the antireflection layer 16 is low, the antireflection layer 16 is easily scraped, and the reflectance change of the scraped portion is large, so that the scratch is easily recognized. On the other hand, when the thickness is 130 nm or less, a good antireflection effect can be obtained. If the thickness of the antireflection layer 16 is too thick, it is difficult for light reflected at the interface between the antireflection layer 16 and the hard coat layer 15 and light reflected on the surface of the antireflection layer 16 to weaken each other, and a good antireflection effect may not be obtained.

The adhesive layer 13 is a layer for adhering the base material 14 of the decorative sheet 12 and the injection molding 11 to each other. The adhesive layer 13 is made of a vinyl chloride-vinyl acetate copolymer resin. The adhesive layer 13 has a thickness of, for example, 0.1 µm to 10 µm. When the thickness is 0.1 µm or more, good adhesion is obtained. When the thickness is 10 µm or less, a decrease in pencil hardness can be suppressed.

The decorative molded article 10 preferably has a pencil hardness of 2B to 3H as measured from the antireflection layer 16 side of the decorative sheet 12. The pencil hardness is measured by the following method. The pencil is placed so as to be 45° ± 1° with respect to the test surface, the test surface is scratched so that the length is 7 mm or more at a load of 750 g and a speed of 2 mm/s, and the hardness at which no scratch is made three times or more out of five times is defined as the pencil hardness of the decorative molded article 10. It is preferable that not only the hard coat layer 15 contributes to the pencil hardness of the decorative molded article 10, but both the acrylic resin having a high Tg as the base material 14 and the hard coat layer 15 provide good pencil hardness. For example, when the pencil hardness required as the final decorative molded article 10 is achieved only by the hard coat layer 15 without using the acrylic resin having a high Tg for the base material 14, the decorative sheet 12 is less likely to stretch due to its hardness, and cracks are likely to occur. On the other hand, when the acrylic resin having a high Tg is used for the base material 14, and the required pencil hardness is achieved by combining the hard coat layer 15 and the base material 14 lower than the required pencil hardness, the decorative sheet 12 having both good pencil hardness and stretchability is obtained. Here, the pencil hardness of the hard coat layer 15 is measured by the same method as in the decorative molded article 10 in a state where only the hard coat layer 15 is laminated on the injection molding 11.

Also, the decorative sheet 12 has an elongation percentage of preferably 100% to 160%, more preferably 130% to 140%. When the elongation percentage is 100% or more, cracks and whitening are less likely to occur in the decorative sheet 12. When the elongation percentage is 160% or less, physical properties such as pencil hardness and reflectance hardly deteriorate. A method for measuring the elongation percentage of the decorative sheet 12 will be described later.

As described above, the decorative molded article 10 as described above has heat resistance because the acrylic resin having a higher Tg than a general acrylic resin is used for the injection molding 11. Also, since the acrylic resin is used for the injection molding, birefringence hardly occurs. Therefore, even when the decorative molded article is used for the cover panel of the display, the screen is less likely to be unclear.

In addition, since the acrylic resin having a higher Tg than a general acrylic resin is used for the base material 14 of the decorative sheet 12, the decorative sheet 12 has both hardness and stretchability. Therefore, the decorative sheet 12 less likely to be cracked while maintaining the hardness is obtained, as compared with the case where the pencil hardness of the decorative sheet 12 is increased only with the hard coat layer 15.

Further, since the vinyl chloride-vinyl acetate copolymer resin is used for the adhesive layer 13, the injection molding 11 made of the acrylic resin having a high Tg and the base material 14 of the decorative sheet 12 made of the acrylic resin having a high Tg, which hardly bond to each other, adhere to each other well. Therefore, a decorative molding 10 in which the injection molding 11 and the base material 14 of the decorative sheet 12 are hardly separated from each other is obtained.

An outline of a method for producing the decorative molded article 10 according to the first embodiment of the present invention will be described below with reference to the drawings.

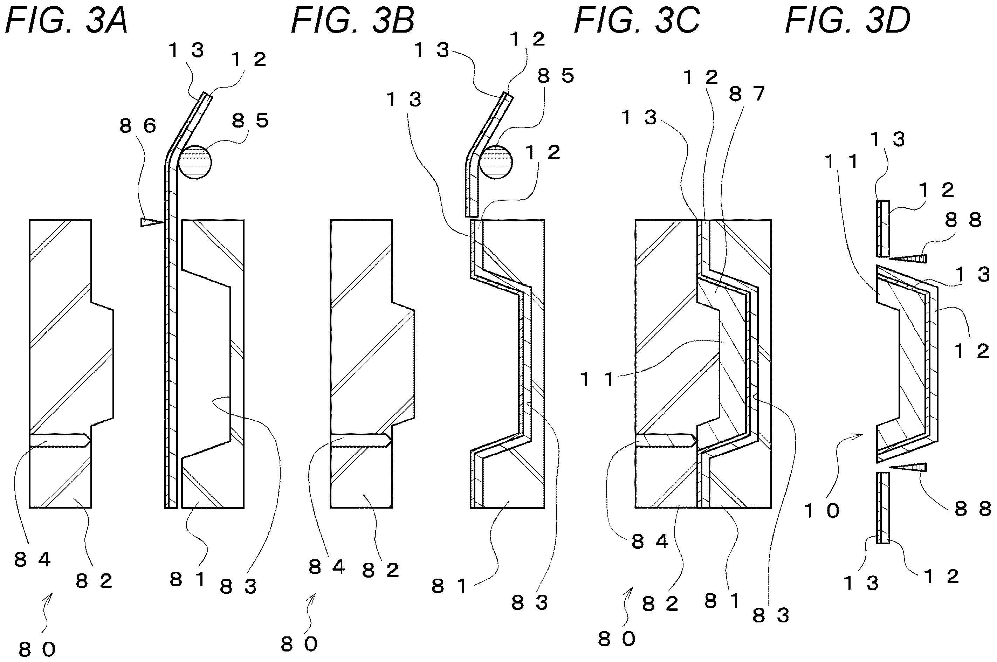

Referring to Fig. 3(a), a decorative sheet 12 is prepared. The decorative sheet 12 includes a base material 14, a hard coat layer 15 formed on the base material 14, and an antireflection layer 16 formed on the hard coat layer 15. In Fig. 3, description of each layer of the decorative sheet 12 is omitted. Next, an adhesive layer 13 is formed on the base material 14 of the decorative sheet 12. In the description of the production method, the "decorative sheet 12 on which the adhesive layer 13 is formed" is also referred to as the "decorative sheet 12". Next, the decorative sheet 12 is disposed in an injection molding die 80. The injection molding die 80 includes a first die 81 and a second die 82. A cavity surface 83 corresponding to the shape of the decorative molded article 10 is formed in the first die 81, and an injection port 84 for injecting a molten resin is formed in the second die 82. Also, by clamping the first die 81 and the second die 82, a space is formed between the first die 81 and the second die 82. This space is referred to as a cavity 87. In the step of disposing the decorative sheet 12 in the injection molding die 80, the decorative sheet 12 is disposed between the first die 81 and the second die 82 such that the antireflection layer 16 faces the cavity surface 83 of the first die 81 through a guide roller 85 from above the first die 81. Next, the decorative sheet 12 is cut by a cutting blade 86. Next, referring to Fig. 3(b), the decorative sheet 12 is three-dimensionally molded along the shape of the cavity surface 83 of the first die 81 by heating at 200°C to 400°C and sucking from the first die 81 side. Next, referring to Fig. 3(c), the first die 81 and the second die 82 are clamped. Next, a molten resin made of an acrylic resin having a Tg of 90°C to 130°C is injected from the injection port 84 of the second die 82 to mold the injection molding 11, and simultaneously, the decorative sheet 12 is fixed to the surface of the injection molding 11 on the first die 81 side via the adhesive layer 13. Next, the injection molding die 80 is opened, and the injection molding 11 to which the decorative sheet 12 is fixed is taken out. Next, referring to Fig. 3(d), an unnecessary portion of the decorative sheet 12 is trimmed by a cutting blade 88 to produce the decorative molded article 10.

The decorative sheet 12 of the present invention can be particularly effectively used as a sheet three-dimensionally molded in an injection molding die as in the above production method. In general, in a method in which a decorative sheet is preformed before injection molding, processing can be performed under a mild condition in which the heating temperature of the preform is 80°C to 160°C. On the other hand, in a method in which the decorative sheet is three-dimensionally molded in an injection molding die, the decorative sheet is formed only under heating conditions at a high temperature of, for example, 200°C to 400°C for a short time and with a suction force, so that cracks are likely to occur. In particular, when the pencil hardness is high, cracks are likely to occur. The decorative sheet 12 of the present invention has both good pencil hardness and stretchability, so that even when the decorative sheet 12 is used for a sheet that is three-dimensionally molded in an injection molding die, a molded article less likely to be cracked and having good pencil hardness is obtained.

Next, action and effect when using a vinyl chloride-vinyl acetate copolymer resin as the adhesive layer 13 will be described. Referring to Table 1, in Example 1, a vinyl chloride-vinyl acetate copolymer resin (vinyl chloride acetate based) was used as an adhesive layer. In Comparative Example 1, no adhesive layer was used. In Comparative Examples 2 and 3, an acrylic resin and a polyester-based resin were used as adhesive layers, respectively. The respective thicknesses are as shown in Table 1. For Example 1 and Comparative Examples 1 to 3, the degree of adhesion between the injection molding and the base material was confirmed. A cross-cut test specified in JISK5600-5-6 was used to confirm the degree of adhesion. Only Example 1 in which a vinyl chloride-vinyl acetate copolymer resin was used for the adhesive layer resulted in good adhesion. In Comparative Example 1 in which the adhesive layer was not used, the injection molding and the base material did not adhere to each other due to poor adhesion. In Comparative Example 2, the injection molding and the base material did not adhere well although an acrylic resin, which is a resin of the same base as the resin used for the injection molding and the base material, was used. In Comparative Example 3, a polyester-based resin generally often used as an adhesive layer was used, but the injection molding and the base material did not adhere well. The reason why only the vinyl chloride-vinyl acetate copolymer resin used in Example 1 achieved good adhesion is considered to be that the vinyl chloride-vinyl acetate copolymer resin has toughness derived from vinyl chloride and adhesion and plasticity derived from vinyl acetate, and thus exhibited good adhesion.

**[Table 1]**

| | | Example 1 | Comparative Example 1 | Comparative Example 2 | Comparative Example 3 |
|---|---|---|---|---|---|
| Thickness | Antireflection layer | 100 nm | | | |
| | Hard coat layer | 4 µm | | | |
| | Base material | 175 µm | | | |
| | Adhesive layer | 2 µm | | | |
| | Injection molding | 2.5 mm | | | |
| Resin component of adhesive layer | | Vinyl chloride acetate based | None | Acrylic | Polyester based |
| Evaluation results (adhesion) | | ○ | × | × | × |

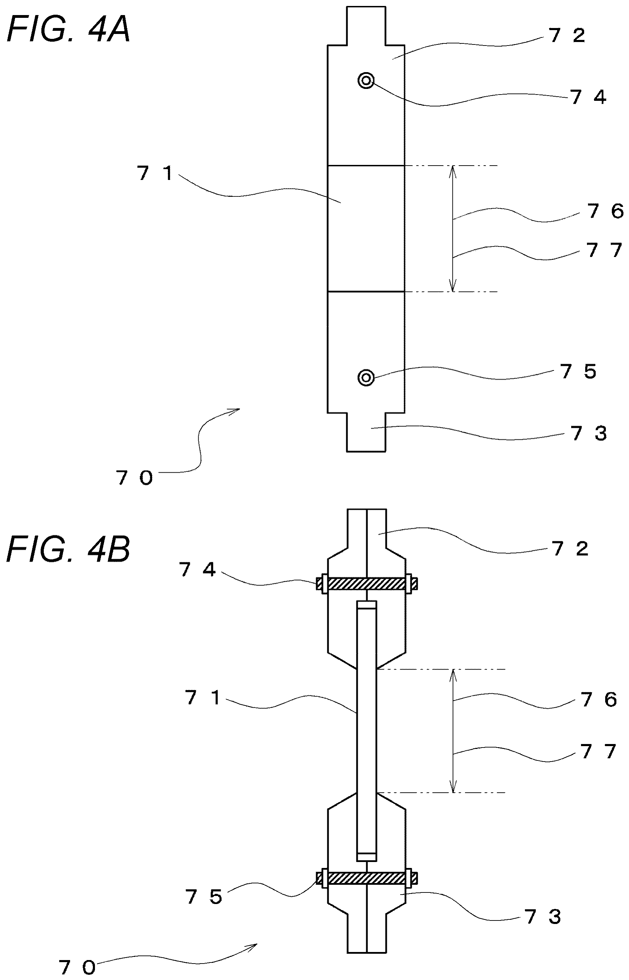

Next, referring to Fig. 4, a method for measuring the elongation percentage of the decorative sheet 12 will be described.

A test piece 71 of the decorative sheet 12 having a width of 10 mm and a length of 100 mm is prepared. Next, the upper side of the test piece 71 is gripped by a chuck 72, and the lower side of the test piece 71 is gripped by a chuck 73. Positions where the test piece 71 is gripped by the chuck 72 and the chuck 73 are fixed by a screw 74 and a screw 75 formed on the chuck 72 and the chuck 73. A distance between the chuck 72 and the chuck 73 is a distance between chucks 76. A distance between marked lines 77 is the same as the distance between chucks before the test. The elongation percentage of the decorative sheet 12 refers to an elongation percentage when cracks or whitening occur in the test piece 71 when both the distance between chucks and the distance between marked lines are set to 40 mm, the test piece 71 having a width of 10 mm and a length of 100 mm is fixed, the chuck 73 is moved downward at a speed of 200 mm/min, and a tensile force is applied to the test piece 71 under the condition of a temperature of 120°C. Here, the elongation percentage is (Increase in distance between chucks in occurrence of crack or whitening from before test)/(Distance between chucks before test) × 100 (%). The "distance between chucks before test" is a distance between chucks before a tensile force is applied to the test piece 71, that is, 40 mm.

Next, action and effect when the acrylic resin beads 65 are used for the hard coat layer 15 for the purpose of imparting an anti-glare function will be described.

Referring to Table 2, in Example 2, an acrylic ultraviolet curable resin obtained by adding the acrylic resin beads to the hard coat layer was used. In Comparative Example 4, an acrylic ultraviolet curable resin obtained by adding silica particles to the hard coat layer was used. The acrylic resin beads and the silica particles impart an anti-glare property to the hard coat layer. The materials and thicknesses of the other layers are as shown in Table 2. The anti-glare property was good in both Example 2 and Comparative Example 4. Moldability was good in Example 2, whereas cracks occurred in the decorative sheet after injection molding in Comparative Example 4. With regard to the chemical resistance, abrasion of the surface of the decorative molded article was evaluated using a Gakushin-type friction tester (friction tester type II) by a white cotton fabric immersed in ethanol under conditions of a load of 200 g, a reciprocating distance of 100 mm, and a speed of 30 reciprocations/min. No abrasion was observed on the surface of the decorative molded article in Example 2, whereas the surface of the decorative molded article was scratched, and good chemical resistance was not obtained in Comparative Example 4. From the above results, the anti-glare property was good for both the acrylic resin beads and the silica particles, but the acrylic resin beads had better moldability and chemical resistance than the silica particles, and it is preferable to use acrylic resin beads depending on the shape of the decorative molded article and the application place.

**[Table 2]**

| | | Example 2 | Comparative Example 4 |
|---|---|---|---|
| Thickness | Antireflection layer | 100 nm | 100 nm |
| | Hard coat layer | Acrylic ultraviolet curable resin + acrylic resin beads | Acrylic ultraviolet curable resin + silica particles |
| | | 4 µm | 4 µm |
| | Base material | 175 µm | 175 µm |
| | Adhesive layer | 2 µm | 2 µm |
| | Injection molding | 2.5 mm | 2.5 mm |
| Anti-glare property | | ○ | ○ |
| Moldability | | ○ | × |
| Chemical resistance | | ○ | × |

Next, a decorative molded article 20 according to a second embodiment of the present invention will be described focusing on differences from the decorative molded article 10 according to the first embodiment.

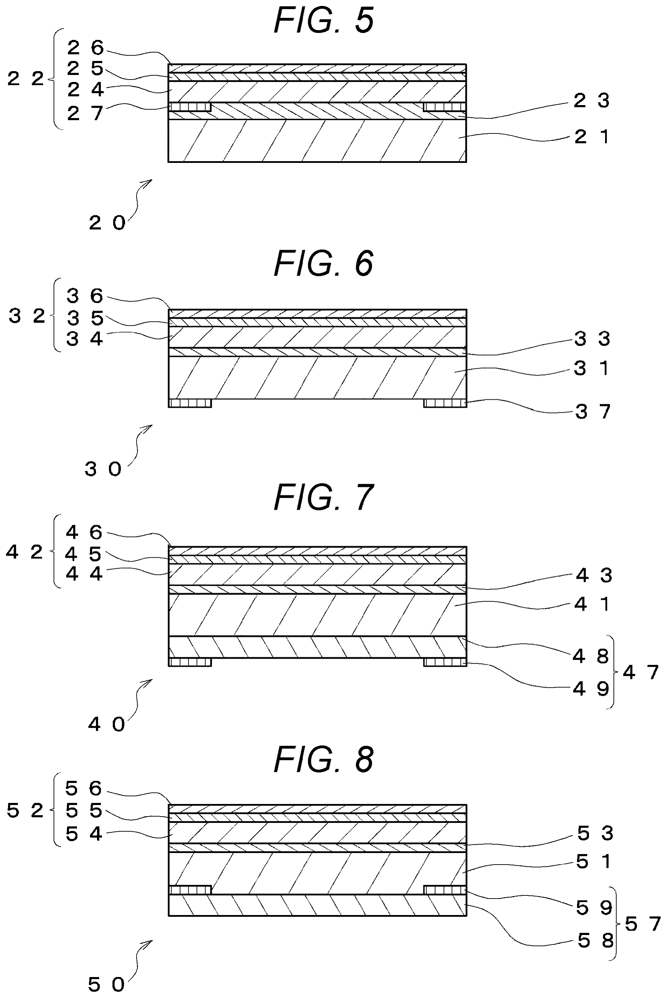

Referring to Fig. 5, the decorative molded article 20 is the same in that it is formed of a decorative sheet 22 including a base material 24, a hard coat layer 25 and an antireflection layer 26, an injection molding 21, and an adhesive layer 23, but is different from the decorative molded article 10 according to the first embodiment in that the decorative sheet 22 further includes a decorative layer 27. The decorative layer 27 is formed on the base material 25 of the decorative sheet 22 on a side opposite to a surface on which the hard coat layer 25 is formed, and is located between the adhesive layer 23 of the decorative molded article 20 and the base material 25. The order of lamination of the other layers is the same as that of the decorative molded article 10 according to the first embodiment.

The decorative layer 27 is a layer for decorating the decorative molded article 20. The decorative layer 27 is formed of, for example, a gravure ink. The gravure ink contains a binder resin, a solvent, and a colorant. Examples of the binder resin include a vinyl chloride vinyl acetate copolymer resin, an acrylic resin, a polyester-based resin, and a polyurethane-based resin. The solvent is used to dissolve the resin, and is selected according to the resin. Examples of the solvent for the gravure ink include toluene, methyl ethyl ketone, ethyl acetate, and isopropyl alcohol. The decorative layer 27 is partially formed on the outer peripheral portion of the decorative molded article 20, for example.

The materials of the other layers are the same as those of the decorative molded article 10 according to the first embodiment.

Next, a decorative molded article 30 according to a third embodiment of the present invention will be described focusing on differences from each of the above embodiments.

Referring to Fig. 6, the decorative molded article 30 is the same in that it is formed of a decorative sheet 32 including a base material 34, a hard coat layer 35 and an antireflection layer 36, an injection molding 31, and an adhesive layer 33, but is different from the decorative molded article 10 according to the first embodiment in that the decorative sheet 32 further includes a decorative layer 37. Also, the position where the decorative layer 37 is formed is different from that of the decorative molded article 20 according to the second embodiment. The decorative layer 37 of the decorative molding 30 is not formed on the decorative sheet 32 but is formed on the injection molding 31 on a side opposite to a surface on which the adhesive layer 33 is formed.

For example, the injection molding 31 and the decorative sheet 32 were bonded to each other via the adhesive layer 33 by injection molding, and then the decorative layer 37 is formed on the injection molding 31 by silk printing. As the decorative layer 37, a material conventionally used for silk printing can be used.

The other layers are the same as those of the decorative molded article according to each of the above embodiments.

Next, a decorative molded article 40 according to a fourth embodiment of the present invention will be described focusing on differences from each of the above embodiments.

Referring to Fig. 7, the decorative molded article 40 is the same in that it is formed of a decorative sheet 42 including a base material 44, a hard coat layer 45 and an antireflection layer 46, an injection molding 41, and an adhesive layer 43, but is different from each of the above embodiments in that an insert sheet 47 is further formed on the injection molding 41 on a side opposite to a surface on which the adhesive layer 43 is formed.

The insert sheet 47 includes a base sheet 48 and a decorative layer 49 formed on the base sheet 48. The base sheet 48 of the insert sheet 47 is laminated on the injection molding 41.

The base sheet 48 is, for example, a thermoplastic resin such as a polypropylene-based resin, a polyethylene-based resin, a polyamide-based resin, an acrylic resin, an olefin-based resin, an epoxy-based resin, a polyimide-based resin, thermoplastic polyurethane, a silicon-based resin, a polyester-based resin, a vinyl chloride-based resin, a polycarbonate-based resin, or an ABS-based resin, or a laminate of these resins. The base sheet 48 preferably has a thickness of, for example, 12 µm to 200 µm. When the thickness is 12 µm or more, the base sheet 48 has a thickness excellent in handleability, and when the thickness is 200 µm or less, the base sheet 48 has moderate rigidity, and thus has good flexibility. In particular, it is preferable to use an acrylic resin or a polycarbonate-based resin. When an acrylic resin or a polycarbonate-based resin is used, shape followability to a die is further improved.

The decorative layer 49 may be made of the same material as the decorative molded article 20 according to the second embodiment.

The other layers are the same as those of the decorative molded article according to each of the above embodiments.

Next, the method for producing the decorative molded article 40 according to the fourth embodiment will be described focusing on differences from the method for producing the decorative molded article 10 according to the first embodiment.

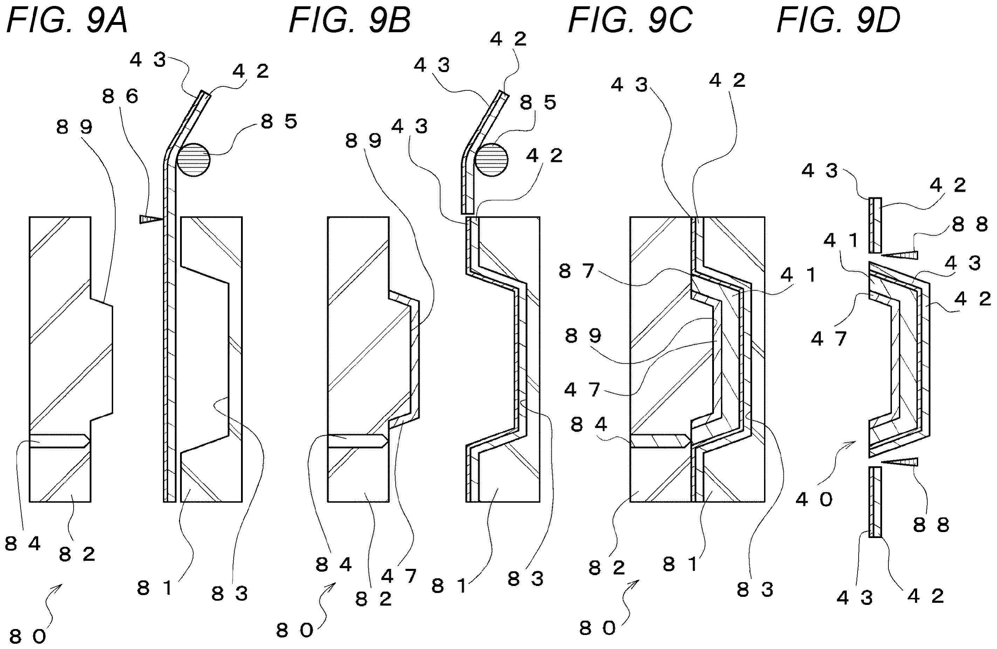

Referring to Fig. 9(a), the step of preparing the decorative sheet 42 and the step of forming the adhesive layer 43 on the decorative sheet are the same. Next, referring to Fig. 9(b), the decorative sheet is disposed on the cavity surface 83 of the first die of the injection molding die 80, and the insert sheet 47 is disposed such that the decorative layer 49 faces the cavity surface 89 of the second die 82. Next, referring to Fig. 9(c), the first die 81 and the second die 82 are clamped. Next, a molten resin made of an acrylic resin having a Tg of 90°C to 130°C is injected from the injection port 84 of the second die 82 to mold the injection molding 41, and simultaneously, the surface of the injection molding 41 on the first die 81 side and the decorative sheet 42 are fixed via the adhesive layer 43, and the surface of the injection molding 41 on the second die 82 side and the insert sheet 47 are fixed. Next, the injection molding die 80 is opened, and the injection molding 11 to which the decorative sheet 12 is fixed is taken out. Next, referring to Fig. 9(d), an unnecessary portion of the decorative sheet 42 is trimmed by a cutting blade 88 to produce the decorative molded article 40.

Next, a decorative molded article 50 according to the fifth embodiment will be described focusing on differences from each of the above embodiments.

Referring to Fig. 8, the decorative molded article 50 is the same as the decorative molded article 40 according to the fourth embodiment in that a decorative sheet 52 including a base material 54, a hard coat layer 55 and an antireflection layer 56 is formed on one surface of an injection molding 51, and an insert sheet 57 including a base sheet 58 and a decorative layer 59 is formed on the other surface of the injection molding 51. On the other hand, the decorative molded article 50 is different in that a surface of the insert sheet 57 on which the decorative layer 59 is formed is laminated with the injection molding 51.

The other points including the production method are the same as those of the decorative molded article 40 according to the fourth embodiment.

The decorative molded article according to the first embodiment has a three-dimensional shape having a flat portion and a rising portion, but may have any shape as long as it can be formed by injection molding, and may have a planar shape or another three-dimensional shape.

Also, in the decorative molded articles according to the second to fifth embodiments, the decorative layer is formed on the outer periphery of the decorative molded article. However, the decorative molded article only needs to be decorated by the decorative layer, and the decorative layer may be partially formed on a portion other than the outer periphery of the decorative molded article, or may be formed on the entire surface of the decorative molded article.

Further, in the decorative molded article according to the second embodiment, the decorative layer is formed using a gravure ink, and in the decorative molded article according to the third embodiment, the decorative layer is formed by silk printing. However, it is sufficient that the injection molding can be decorated with the decorative layer, and the decorative layer may be formed using another ink or printing method.

Furthermore, in the method for producing a decorative molded article according to each of the above embodiments, the injection molding die having the injection port in the second die is used. However, it is sufficient that the molten resin can be injected from the injection port into the cavity of the injection molding die, and the injection port may be disposed in either the first die or the second die.

### Reference Signs List

- 10: Decorative molded article
- 11: Injection molding
- 12: Decorative sheet
- 13: Adhesive layer
- 14: Base material
- 15: Hard coat layer
- 16: Antireflection layer
- 20: Decorative molded article
- 21: Injection molding
- 22: Decorative sheet
- 23: Adhesive layer
- 24: Base material
- 25: Hard coat layer
- 26: Antireflection layer
- 27: Decorative layer
- 30: Decorative molded article
- 31: Injection molding
- 32: Decorative sheet
- 33: Adhesive layer
- 34: Base material
- 35: Hard coat layer
- 36: Antireflection layer
- 37: Decorative layer
- 40: Decorative molded article
- 41: Injection molding
- 42: Decorative sheet
- 43: Adhesive layer
- 44: Base material
- 45: Hard coat layer
- 46: Antireflection layer
- 48: Base sheet
- 49: Decorative layer
- 50: Decorative molded article
- 51: Injection molding
- 52: Decorative sheet
- 53: Adhesive layer
- 54: Base material
- 55: Hard coat layer
- 56: Antireflection layer
- 58: Base sheet
- 59: Decorative layer
- 65: Acrylic resin beads
- 66: Fine irregularities
- 71: Test piece
- 76: Distance between chucks
- 77: Distance between marked lines
- 80: Injection molding die
- 81: First die
- 82: Second die
- 83: Cavity surface
- 87: Cavity
- 89: Cavity surface

## Claims

1. A decorative molded article comprising:
an injection molding made of an acrylic resin having a glass transition temperature of 110°C to 130°C;
an adhesive layer made of a vinyl chloride-vinyl acetate copolymer resin that is formed on the injection molding; and
a decorative sheet formed on the adhesive layer,
wherein the decorative sheet includes a base material made of an acrylic resin having a glass transition temperature of 90°C to 130°C, a hard coat layer formed on the base material, and an antireflection layer formed on the hard coat layer, and
the base material of the decorative sheet is bonded to the injection molding.

2. The decorative molded article according to claim 1, wherein the pencil hardness measured from the antireflection layer side of the decorative sheet is 2B to 3H.

3. The decorative molded article according to claim 1, wherein when a test piece of 10 mm × 100 mm of the decorative sheet is fixed at a temperature of 120°C with a distance between chucks of 40 mm and a distance between marked lines of 40 mm and a tensile test is performed with a load applied to one end of the test piece at a constant speed of 200 mm/min, the elongation percentage of the decorative sheet when cracks or whitening occur is 100% to 160%.

4. The decorative molded article according to claim 1, wherein the hard coat layer contains acrylic resin beads, and has fine irregularities on a surface on which the antireflection layer is formed.

5. The decorative molded article according to claim 1, further comprising a decorative layer between the adhesive layer and the base material or on a surface of the injection molding opposite to a surface on which the adhesive layer is formed.

6. The decorative molded article according to claim 1, further comprising:
a base sheet on a surface of the injection molding opposite to a surface on which the adhesive layer is formed, and
a decorative layer between the base sheet and the injection molding or on a surface of the base sheet opposite to a surface on which the injection molding is formed.

7. A method for producing a decorative molded article comprising the steps of:
preparing a decorative sheet including a base material made of an acrylic resin having a glass transition temperature of 90°C to 130°C, a hard coat layer formed on the base material, and an antireflection layer formed on the hard coat layer;
forming an adhesive layer made of a vinyl chloride-vinyl acetate copolymer resin on a surface of the base material opposite to a surface on which the hard coat layer is formed;
disposing the decorative sheet on which the adhesive layer is formed in an injection molding die including a first die and a second die that forms a cavity with the first die by clamping such that the antireflection layer faces a cavity surface of the first die of the injection molding die;
three-dimensionally molding the decorative sheet on which the adhesive layer is formed along a shape of a cavity surface of the first die;
clamping the injection molding die;
injecting a molten resin made of an acrylic resin having a glass transition temperature of 90°C to 130°C into the cavity to mold an injection molding, and simultaneously fixing the decorative sheet to a surface of the injection molding via the adhesive layer; and
opening the injection molding die to take out the injection molding.

8. The method for producing a decorative molded article according to claim 7, further comprising the steps of:
preparing an insert sheet including a base sheet and a decorative layer formed on the base sheet before the step of clamping the injection molding die, and disposing the insert sheet such that the base sheet or the decorative layer faces a cavity surface of the second die of the injection molding die,
wherein the step of fixing the decorative sheet to the surface of the injection molding via the adhesive layer is a step of injecting a molten resin made of an acrylic resin having a glass transition temperature of 90°C to 130°C into the cavity to mold an injection molding, and simultaneously fixing the decorative sheet to the surface of the injection molding on the first die side via the adhesive layer, and fixing the base sheet or the decorative layer of the insert sheet to the surface of the injection molding on the second die side.
